# EUROPEAN PATENT SPECIFICATION

(11) **EP 0 930 449 B1**
(45) Date of publication and mention of the grant of the patent: **18.07.2001**
(21) Application number: 99107167.1
(22) Date of filing: 17.03.1997
(51) Int. Cl.: F16H 15/38, F16H 61/00, F16H 57/04

(54) **Roller assembly for piston actuator**
Rolleranordnung für Betätigungskolben
Système de galet pour actuateur à piston

(30) Priority: 01.04.1996 GB 9606897
(43) Date of publication of application: 21.07.1999
(62) Divisional of application: 97907220.4
(73) Proprietor: TOROTRAK (DEVELOPMENT) LIMITED, Leyland, Lancashire PR5 3QW (GB)
(72) Inventor: Greenwood, Christopher John, Leyland, Preston, Lancashire PR5 3WS (GB); Robinson, Leslie Kendrick, Leyland, Preston PR5 1HN (GB); Patterson, Mervyn John George, Chorley PR7 2HF (GB)
(74) Representative: Bingham, Ian Mark

(56) References cited:
- WO-A-94/01697
- US-A- 3 828 618

## Description

This invention relates to rollers, and to actuation thereof. It relates especially, but not exclusively, to rollers that must rotate at high speed and under high loading from two opposed surfaces which contact the roller at opposite ends of a diameter, so squeezing the roller between them. The invention thus relates particularly to the rollers used in the variators of the toroidal-race rolling traction type.

In such variators, the cooling of the discs and rollers and of the traction fluid is always an important consideration. As is well understood in the art, the fluid must always be present in the form of a thin film between the rollers and the toroidal races of the discs, to prevent metal-to-metal contact, so that traction is transmitted between discs and rollers by way of shear generated within the thin film. In practice the waste heat generated within the film, in an instant during which it is transmitting traction, is quickly dissipated an instant later when that particular volume of fluid will have moved clear of the "nip" between race and rollers. As to the discs, the heat conductivity of the hardened steel they are made of is not particularly high. However, the total area of each race is high compared with the areas of instantaneous contact with its cooperating rollers, and the location of those areas of contact tends to change frequently because the ratio transmitted by the variator is also continually changing. Conventional lubrication techniques are therefore usually sufficient to prevent overheating of the discs.

With the rollers it is different, however: the heat input is always concentrated at the circumference. The concentration of the heat input is aggravated by the fact that the roller rim is in practice rounded to a cross-radius, so that the instantaneous "contact" between roller and race, by way of the intervening film of traction fluid, tends to be small when measured in a direction parallel to the roller axis.

British patent application number GB-A-2282196 discloses a roller assembly for the above type of variator in which cooling fluid is provided to the roller surface via a hollow roller support arm. The fluid is passed through a single outlet positioned opposite the roller outer surface and bathes the roller in cooling fluid. A roller assembly as defined in the preamble of claim 1 is known from WO-A-94/01697.

It is an object of the present invention to provide an improved actuation apparatus for such rollers.

Accordingly, the present invention provides a roller assembly for use in a toroidal-race rolling-traction variator comprising a roller mounted on a carriage and ducting introducing flows of cooling fluid to the roller in which said carriage is operably. connected by means of a stem to a double acting piston of a roller control cylinder, said stem has a passageway therethrough to transport cooling fluid to said ducting, characterised in that said stem has an end face exposed to a pressurising effect of the cooling fluid, and said double acting piston has a confronting surface also exposed to the pressurising effect of the cooling fluid, such that any axial load on the stem is at least partially counteracted by an opposite effect on the confronting surface of said double acting piston.

Preferably, the mutually confronting surfaces act to define a cavity into which the cooling fluid is provided and the assembly further comprises an axially extending supply pipe extending into said cavity to supply fluid thereto.

Advantageously, the assembly further comprises an axially extending passage in the double acting piston positioned to receive the supply of fluid and being movable relative to the supply pipe such as to facilitate the supply of fluid to the cavity regardless of the axial position of the piston.

In a particularly advantageous arrangement said ducting includes at least two mutually opposed outlets positioned to direct cooling fluid onto opposing portions of the roller and in which each outlet includes two or more apertures being angled relative to one another so as to direct a stream of cooling fluid onto different portions of an outer contacting surface of the roller.

In an alternative or additional arrangement the assembly includes two opposed outlets which are positioned to direct cooling fluid onto said outer contacting surface of the roller.

Preferably, said apertures are angled relative to one another such as to direct cooling fluid both upstream and downstream onto said outer contacting surface of the roller.

Advantageously, the assembly includes at least one spray bar which extends part-way around but radially spaced from the outer contacting surface of the roller.

In a particularly advantageous arrangement said at least one spray bar includes a plurality of said outlets.

Preferably, the outlets comprise nozzles.

Conveniently, at least one spray bar is positioned such as to direct the cooling fluid at or near to a position at which said roller makes or loses contact with another part of the variator.

Embodiments of the invention will now be described, by way of example only, with reference to the accompanying drawing in which:-
Figure 1 is a perspective view of a roller assembly for use in a variator of the toroidal-race rolling-traction type (not shown);
Figure 2 is an axial section both of this assembly and of an alternative design of roller assembly;
Figure 3 is a partial cross-sectional view taken in the direction of arrows x - x of figure 2 and illustrates a first arrangement of the discharge apertures;
Figure 4 is a partial cross-sectional view taken in the direction of arrows x - x of figure 2 and illustrates a second arrangement of the discharge apertures;
Figure 5 is a cross-sectional view of an alternative form of roller assembly; and
Figure 6 is a schematic representation of a continuously-variable transmission of the type in which rollers of the present invention may be incorporated.

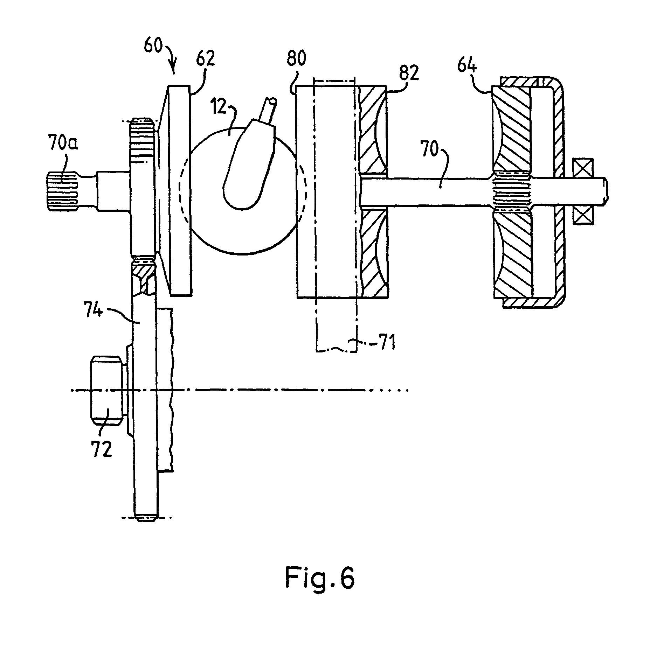

In the roller assembly 10 illustrated in the drawings, reference numeral 12 indicates the roller and numerals 14,15 indicate the bearings by which it is mounted for rotation on a central shaft 17 in a supporting carriage 19. The roller supporting part of the carriage 19 is secured to a stem section 21. At its proximal end 21a, the stem 21 is in turn supported by a spherical joint 23 in the piston 25 of a roller control cylinder 27 of known type. Movement of the piston is achieved by varying the pressures on either side of the piston. The proximal end 21a is open and moves within a hollow plug 29 which is accepted in an appropriate mounting socket shown schematically at 32 on the variator casing to secure the roller 10 assembly in place in the variator (see figure 6).

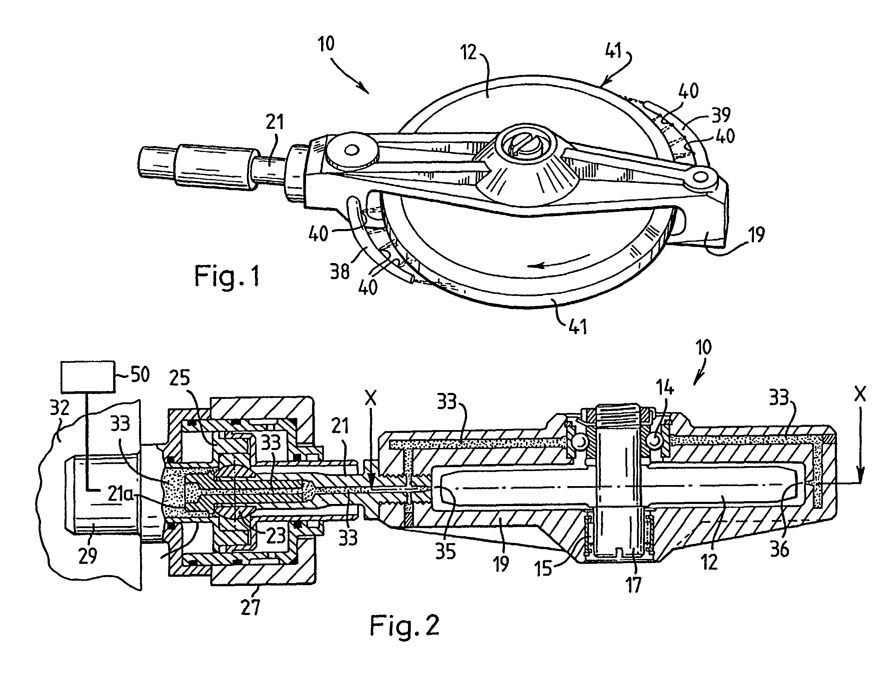

From figure 2, it will be observed that the roller carriage 19 and the piston stem 21 are provided with a network of passageways 33. This enables cooling liquid *e.g.* oil diverted from, for example, the variator's lubrication circuit shown schematically at 50, to be fed via the mounting socket *32 etc.* through the roller carriage 19 to two discharge apertures 35,36 adjacent the roller rim.

The discharge apertures are best provided in the form of nozzles capable of creating a spray or stream (jet) of cooling fluid and directing it onto an appropriate portion of the roller 12. Whilst the cross-section of figure 2 illustrates a simple convergent nozzle, it will be appreciated that various forms of nozzles thereof may be used and that the final form depends on the required flow pattern.

In the preferred embodiment of Figure 1, however, the roller assembly is alternatively or additionally provided with two curved spray bars 38,39 extending part-way around the roller rim downstream of the (fixed) locations 41 at which the rim makes contact with the variator input and output discs, and, advantageously, the two spray bars terminate in end nozzles or apertures 40 operative to direct streams of cooling liquid at or just downstream of the contact locations 41 at which point it is hottest, so as to maximise the cooling effect there. As shown the nozzles are positioned close to the point at which it is desired to direct the cooling fluid and are such as to create a discrete flow of fluid. Such an arrangement provides a particularly effective method of cooling the roller surface and is, therefore, of benefit when a higher cooling rate is required. The broken lines in Figure 1 diagrammatically indicate the streams of cooling fluid provided by the spray bars 38,39 in operation of the assembly. The nozzles 35, 36 of figure 2 also benefit from being close to the roller surface 41 and are also, preferably, provided in the form of stream creating nozzles.

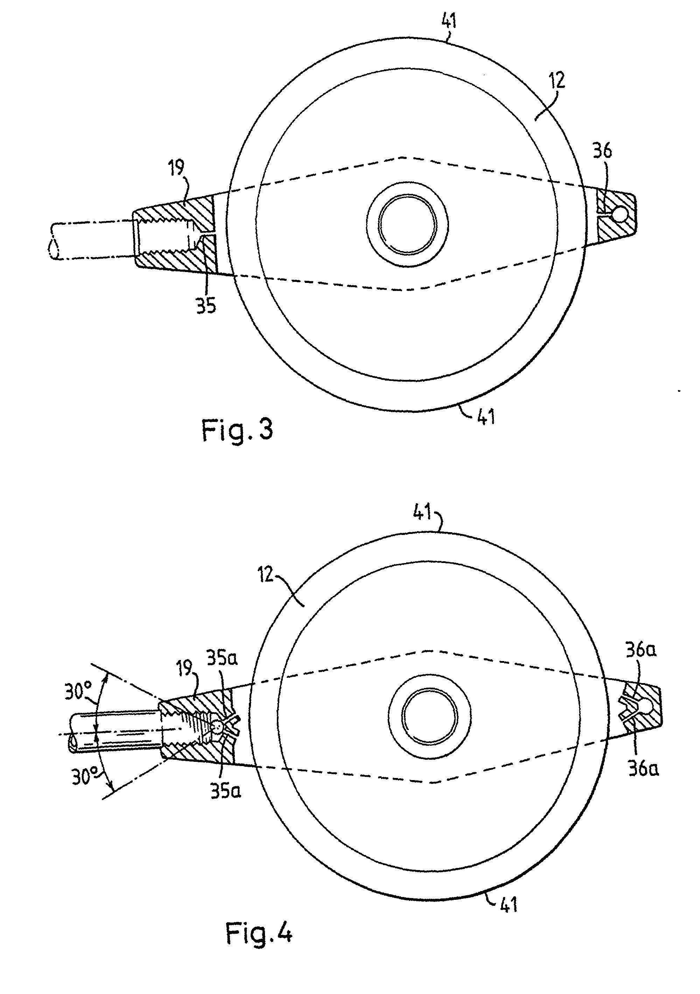

Referring now to figures 3 and 4, it will be appreciated that, in the simple form of the present invention i.e. an arrangement without spraybars 32, 39, one may employ a number of nozzle or aperture arrangements. For example, one might employ the arrangement of figure 3 in which a pair of mutually opposed nozzles 35, 36 are provided at opposite sides of the carriage 19 (see also figure 2) and positioned for directing a spray or stream towards each other such that the cooling fluid is deposited onto surface 41 of the roller 12. As shown in figure 4, one could employ a plurality of nozzles or apertures on each side of the carriage 19. In the particular example of figure 4, a pair of nozzles 35a, 35b, 36a, 36b are provided on each side of the carriage 19. The nozzles of the first pair 35a, 35b are each angled relative to each other such that they direct fluid flow onto different areas of roller 12. Preferably, the nozzles of each pair are angled relative to each other such that one directs a stream of fluid upstream of their position whilst the other directs fluid downstream thereof. The nozzles of the other pair 36a, 36b are similarly positioned and directed. Whilst the actual angular position is very much dependent upon the specific requirements of the apparatus, it has been found that by angling one nozzle upstream at an angle of approximately 30° longitudinal axis of the roller assembly and the other downstream at a similar angle provides an effective cooling pattern without excess diffusion taking place before the spray contacts the roller surface 41. Other possibilities will, however, present themselves to a person skilled in the art. Additionally, it will be possible to employ a combination of nozzle arrangements from figures 3 and 4.

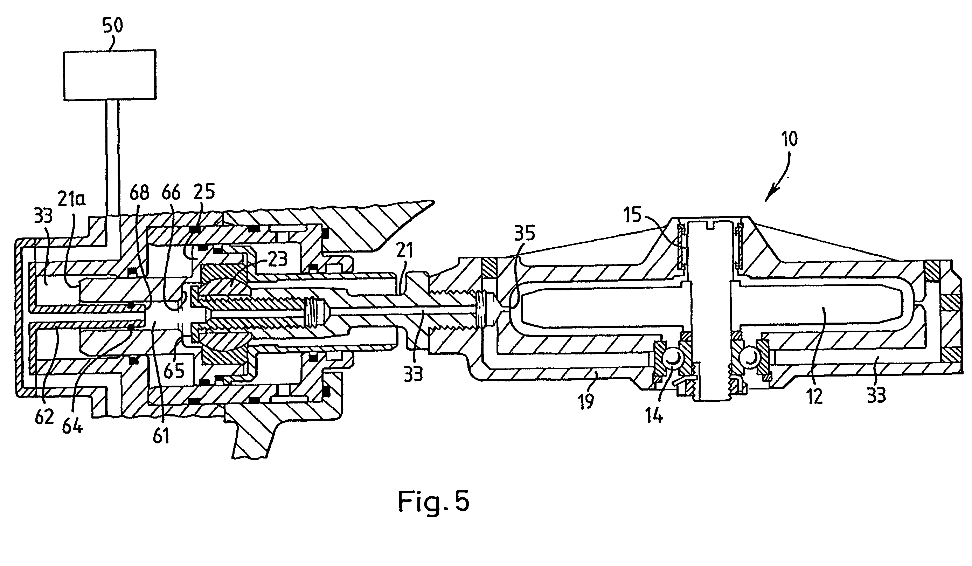

Figure 5 illustrates an alternative form of roller assembly 10 substantially the same as that shown in figure 2 save for the features associated with the supply of cooling fluid to the proximal end 21a of stem 21. In this particular arrangement, the cooling fluid is supplied to the interior 60 of the stem 21 via an axially extending supply pipe 62. This pipe is provided with an annular seal 64 which prevents fluid seeping out into region 33 in which it could act against proximal end 21a and affect the axial position of the roller. The supply pipe extends into a cavity 61 formed between an end face 65 of stem 21 and a confronting surface 65 of the double acting piston 25. It will be appreciated that by extending the supply pipe into the piston portion 25 of the roller mechanism, the fluid pressure will act against surface 64 but the effect thereof will be counteracted by the pressure exerted on confronting surface 66 which is part of the piston assembly 25. Any effect that the pressurised cooling fluid might have on the axial position of the roller assembly may be minimised or possibly eliminated by suitable sizing of the two confronting surfaces 65, 66. A small movement effect will be present due to the existence of an end surface 68 on the supply duct, but this might also be reduced or even eliminated by careful design. As shown in figure 5, the supply pipe 62 extends axially onto an axially extending passage formed in the double acting piston 25 which, in operation, slides over the supply pipe 62 as it moves back and forth, thereby to ensure effective supply of fluid to the cavity regardless of the axial position of the piston 25.

Referring now briefly to figure 6, a variator suitable for use with the newly proposed roller assemblies 10 comprises a pair of input roller discs 62,64 and a pair of output roller discs 80, 82 all of which are mounted on input shaft 70 in a manner well known in the art and therefore not described further herein. A first end 70a of the shaft is driven by, for example, a vehicle's engine and rotation thereof is passed to the output discs 80, 82 via the input discs and the rollers 12 positioned therebetween. The output discs 80, 82 are linked via a chain drive 71 to an epicyclic gearbox ( not shown ) which in turn drives output shaft 72 connected to, for example, the vehicle's transmission. A gear wheel 74 provided on output shaft 72 is clutchably engageable to the shaft and meshes with a permanently engaged gear on the input shaft 70 thereby to provide direct drive to the output shaft whenever desirable. The variator as described is of conventional form save for the roller assemblies which are as described above and as shown in figures 1 to 5 of the attached drawings.

## Claims

1. A roller assembly for use in a toroidal-race rolling-traction variator comprising a roller (12) mounted on a carriage (19) and ducting introducing flows of cooling fluid to the roller (12) in which said carriage (19) is operably connected by means of a stem (21) to a double acting piston (25) of a roller control cylinder (27), said stem (21) has a passageway (33) therethrough to transport cooling fluid to said ducting, characterised in that said stem (21) has an end face exposed to a pressurising effect of the cooling fluid, and said double acting piston (25) has a confronting surface also exposed to the pressurising effect of the cooling fluid, such that any axial load on the stem (21) is at least partially counteracted by an opposite effect on the confronting surface of said double acting piston (25).

2. The assembly of Claim 1, in which the mutually confronting surfaces act to define a cavity (61) into which the cooling fluid is provided and the assembly further comprises an axially extending supply pipe (62) extending into said cavity to supply fluid thereto.

3. The assembly of Claim 2, further comprising an axially extending passage in the double acting piston positioned to receive the supply of fluid and being movable relative to the supply pipe such as to facilitate the supply of fluid to the cavity regardless of the axial position of the piston.

4. A roller assembly as claimed in any one of Claims 1 to 3 in which said ducting includes at least two mutually opposed outlets (35,36) positioned to direct cooling fluid onto opposing portions of the roller and in which each outlet (35,36) includes two or more apertures being angled relative to one another so as to direct a stream of cooling fluid onto different portions of an outer contacting surface of the roller (12).

5. The assembly of Claim 4, in which said carriage comprises said two opposed outlets (35,36) which are positioned to direct cooling fluid onto said outer contacting surface of the roller (12).

6. The assembly of Claim 4 or 5, in which said apertures are angled relative to one another such as to direct cooling fluid both upstream and downstream onto said outer contacting surface of the roller (12).

7. The assembly of any one of Claims 4 to 6, and including at least one spray bar which extends part-way around but radially spaced from the outer contacting surface of the roller (12).

8. The assembly of Claim 7, in which said at least one spray bar includes a plurality of said outlets (40).

9. The assembly of any one of Claims 4 to 8, in which said outlets comprise nozzles.

10. The assembly of any one of the Claims 4 to 6, in which at least one spray bar is positioned such as to direct the cooling fluid at or near to a position at which said roller makes or loses contact with another part of the variator.

## Patentansprüche

1. Rollenanordnung zur Verwendung in einem Variator mit Ringbahn-Rolltraktion, aufweisend eine auf einem Laufwerk (19) montierte Rolle (12) und Kanäle, die Ströme eines Kühlfluids zur Rolle (12) einführen, in der das Laufwerk (19) mittels einer Stange (21) mit einem doppelwirkenden Kolben (25) eines Steuerzylinders (27) der Rolle wirksam verbunden ist, die Stange (21) einen Durchgang (33) aufweist, um Kühlfluid durch ihn zu den Kanälen zu transportieren, dadurch gekennzeichnet, daß die Stange (21) eine einer Druckwirkung des Kühlfluids ausgesetzte Stirnfläche aufweist und der doppelwirkende Kolben (25) eine gegenüberliegende, der Druckwirkung des Kühlfluids ebenfalls ausgesetzte Oberfläche hat, so daß einer axialen Last auf der Stange (21) durch eine entgegengesetzte Wirkung auf der gegenüberliegenden Oberfläche des doppelwirkenden Kolbens (25) zumindest teilweise entgegengewirkt wird.

2. Anordnung nach Anspruch 1, in der die wechselseitig gegenüberliegenden Oberflächen dazu dienen, einen Hohlraum (61) definieren, in den das Kühlfluid geleitet wird, und die Anordnung ferner ein axial verlaufendes, sich in den Hohlraum erstreckendes Zufuhrrohr (62) aufweist, um ihm Fluid zuzuführen.

3. Anordnung nach Anspruch 2, ferner aufweisend einen axial verlaufenden Durchgang im doppelwirkenden Kolben, der angeordnet ist, um die Fluidzufuhr zu empfangen, und in bezug auf das Zufuhrrohr bewegbar ist, um ungeachtet der axialen Stellung des Kolbens die Fluidzufuhr zum Hohlraum zu erleichtern.

4. Rollenanordnung nach einem der Ansprüche 1 bis 3, in der die Kanäle zumindest zwei wechselseitig gegenüberliegende Auslässe (35, 36) aufweisen, die angeordnet sind, um Kühlfluid auf gegenüberliegende Abschnitte der Rolle zu lenken, und in der jeder Auslaß (35, 36) zwei oder mehr Öffnungen enthält, die in bezug auf einander unter einem Winkel angeordnet sind, um einen Kühlfluidstrom auf verschiedene Abschnitte einer äußeren Kontaktfläche der Rolle (12) zu lenken.

5. Anordnung nach Anspruch 4, in der das Laufwerk zwei gegenüberliegende Auslässe (35, 36) aufweist, die angeordnet sind, um Kühlfluid auf die äußere Kontaktfläche der Rolle (12) zu lenken.

6. Anordnung nach Anspruch 4 oder 5, in der die Öffnungen in bezug auf einander unter einem Winkel angeordnet sind, um ein Kühlfluid sowohl stromaufwärts als auch stromabwärts auf die äußere Kontaktfläche der Rolle (12) zu lenken.

7. Anordnung nach einem der Ansprüche 4 bis 6, und mit zumindest einem Sprühstab, der teilweise um die äußere Kontaktfläche der Rolle (12), aber von ihr radial beabstandet verläuft.

8. Anordnung nach Anspruch 7, in der der zumindest eine Sprühstab mehrere Auslässe (40) enthält.

9. Anordnung nach einem der Ansprüche 4 bis 8, in der die Auslässe Düsen umfassen.

10. Anordnung nach einem der Ansprüche 4 bis 6, in der zumindest ein Sprühstab angeordnet ist, um das Kühlfluid bei oder nahe einer Stelle zu lenken, an der die Rolle einen Kontakt mit einem anderen Teil des Variators herstellt oder verliert.

## Revendications

1. Ensemble de rouleau destiné à être utilisé dans un variateur de traction-roulement à piste toroïdale comprenant un rouleau (12) monté sur un chariot (19) et des conduits introduisant des flux de fluide de refroidissement sur le rouleau (12), dans lequel ledit chariot (19) est raccordé de façon opérationnelle au moyen d'une tige (21) à un piston à double effet (25) d'un cylindre de commande de rouleau (27), ladite tige (21) comportant un passage (33) à travers celle-ci pour transporter un fluide de refroidissement vers lesdits conduits, caractérisé en ce que ladite tige (21) comporte une face d'extrémité exposée à un effet de pressurisation du fluide de refroidissement, et en ce que ledit piston à double effet (25) comporte une surface en vis-à-vis également exposée à l'effet de pressurisation du fluide de refroidissement, de telle sorte que toute charge axiale sur la tige (21) soit au moins partiellement contrecarrée par un effet opposé sur la surface en vis-à-vis dudit cylindre à double effet (25).

2. Ensemble selon la revendication 1, dans lequel les surfaces mutuellement en vis-à-vis agissent de façon à définir une cavité (61) dans laquelle le fluide de refroidissement est délivré, et l'ensemble comprend de plus un tuyau d'alimentation s'étendant axialement (62), s'étendant à l'intérieur de ladite cavité pour délivrer du fluide à celle-ci.

3. Ensemble selon la revendication 2, comprenant de plus un passage s'étendant axialement dans le piston à double effet, positionné de façon à recevoir la délivrance de fluide et étant mobile par rapport au tuyau d'alimentation de façon à faciliter la délivrance de fluide à la cavité quelle que soit la position axiale du piston.

4. Ensemble de rouleau selon l'une quelconque des revendications 1 à 3, dans lequel lesdits conduits comprennent au moins deux sorties mutuellement opposées (35, 36) positionnées pour diriger du fluide de refroidissement sur des parties opposées du rouleau, et dans lequel chaque sortie (35, 36) comprend deux ou plusieurs ouvertures faisant un certain angle l'une par rapport à l'autre de façon à diriger un courant de fluide de refroidissement sur des parties différentes d'une surface de contact extérieure du rouleau (12).

5. Ensemble selon la revendication 4, dans lequel ledit chariot comprend lesdites deux sorties opposées (35, 36) qui sont positionnées de façon à diriger un fluide de refroidissement sur ladite surface de contact extérieure du rouleau (12).

6. Ensemble selon la revendication 4 ou 5, dans lequel lesdites ouvertures font un certain angle l'une par rapport à l'autre de façon à diriger le fluide de refroidissement aussi bien vers l'amont que vers l'aval sur ladite surface de contact extérieure du rouleau (12).

7. Ensemble selon l'une quelconque des revendications 4 à 6, et comprenant au moins une rampe de pulvérisation qui s'étend partiellement autour de la surface de contact extérieure du rouleau (12) mais radialement espacée de celle-ci.

8. Ensemble selon la revendication 7, dans lequel ladite rampe de pulvérisation au nombre d'au moins une comprend une pluralité desdites sorties (40).

9. Ensemble selon l'une quelconque des revendications 4 à 8, dans lequel lesdites sorties comprennent des buses.

10. Ensemble selon l'une quelconque des revendications 4 à 6, dans lequel au moins une rampe de pulvérisation est positionnée de façon à diriger le fluide de refroidissement en une position dans laquelle ledit rouleau vient en contact ou quitte son contact avec une autre partie du variateur, ou au voisinage de celle-ci.
